# FASCICULE DE BREVET EUROPEEN

(11) **EP 2 127 955 B1**
(45) Date de publication et mention de la délivrance du brevet: **16.02.2011**
(21) Numéro de dépôt: 09161573.2
(22) Date de dépôt: 29.05.2009
(51) Int. Cl.: B60R 19/24

(54) **Ensemble d'un presseur et d'une première pièce de carrosserie**
Gesamtheit aus einer Presswalze und einem ersten Karosserieteil
Assembly of a presser and a first body part

(30) Priorité: 30.05.2008 FR 0853568
(43) Date de publication de la demande: 02.12.2009
(73) Titulaire: Compagnie Plastic Omnium, 69007 Lyon (FR)
(72) Inventeur: Garboud, Lilian, 01150, LAGNIEU (FR)
(74) Mandataire: Remy, Vincent Noel Paul

(56) Documents cités:
- EP-A- 0 720 935
- EP-A- 0 970 854
- DE-A1-102004 034 495
- DE-A1-102005 029 544
- GB-A- 2 274 872

## Description

La présente invention concerne le domaine technique des pièces de carrosserie de véhicule automobile, et en particulier le domaine de l'accostage des pièces de carrosserie les unes par rapport aux autres le document DE 10 2004 034 495 décrit un ensemble selon le préambule de la revendication 1.

Pour mettre en référence deux pièces de carrosserie, telles qu'une aile et une peau de pare-chocs, on connaît, dans l'état de la technique, un presseur apte à être fixé sur l'aile du véhicule de façon à longer une paroi de l'aile. La peau de pare-chocs est munie, à une extrémité destinée à longer la paroi de l'aile, d'une pluralité d'orifices de fixation, coopérant chacun avec une languette portée par le presseur. Grâce aux orifices et aux languettes, la peau de pare-chocs est apte à s'encliqueter sur le presseur de sorte que son extrémité longe le bord de l'aile.

L'accostage de l'aile sur la peau de pare-chocs à l'aide d'un tel presseur est satisfaisant. Toutefois, pour des raisons esthétiques, on recherche pour certains modèles de véhicule automobile à améliorer encore l'accostage de l'aile et de la peau de pare-chocs de sorte que les jeux et affleurements entre ces deux pièces soient optimaux.

On rappelle qu'un jeu entre deux pièces est l'espace visible entre le bord de ces deux pièces. Un jeu optimal est donc un jeu nul.

L'affleurement mesure la discontinuité d'inclinaison et le décalage des arêtes entre les surfaces des deux pièces. Un affleurement optimal est atteint lorsque les surfaces des deux pièces sont exactement dans le prolongement l'une de l'autre.

L'invention, comme définie par la revendication 1, permet d'améliorer l'accostage de deux pièces de carrosserie, notamment d'une aile et d'une peau de pare-chocs de véhicule automobile.

A cet effet, l'invention a notamment pour objet un ensemble d'une première pièce de carrosserie et d'un presseur apte à mettre en référence la première pièce de carrosserie et une deuxième pièce de carrosserie, dans lequel :
- le presseur comprend une languette s'étendant dans une direction longitudinale du presseur essentiellement sur toute la longueur de celui-ci, apte à former une gorge avec une paroi associée à la deuxième pièce de carrosserie, lorsque le presseur est positionné sur la deuxième pièce de carrosserie,
- la languette est déformable élastiquement selon une direction perpendiculaire à la direction longitudinale du presseur, de manière à s'éloigner de la paroi avec laquelle elle forme une gorge,
- la première pièce de carrosserie comprend, à une extrémité, une saillie dimensionnée pour s'engager dans la gorge, essentiellement sur toute la longueur de celle-ci,
- la languette et la saillie sont conformées de sorte que, lorsque la saillie est engagée dans la gorge, la languette est apte à presser la saillie contre la paroi avec laquelle la languette forme une gorge.

Il est à noter que la languette est conformée pour être relativement rigide de façon à maintenir la saillie dans la gorge. La languette est apte à se déformer de façon élastique juste de façon suffisante pour pouvoir introduire la saillie dans la gorge.

Un tel ensemble permet d'effectuer un accostage continu des première et deuxième pièces de carrosserie, sur toute la longueur de la liaison entre ces deux pièces. Du fait de cette continuité, la gestion des jeux et affleurements est plus régulière et, de ce fait, optimisée. Il est à noter que plus l'interface entre les deux pièces de carrosserie est longue, plus l'ensemble selon l'invention est avantageux et améliore la gestion des jeux et affleurements par rapport à l'état de la technique.

En outre, le système de fixation utilisé étant moins volumineux et plus proche de l'accostage que les moyens d'encliquetage de l'état de la technique, la première pièce de carrosserie est amenée au plus près de la paroi la deuxième pièce de carrosserie et le jeu entre les deux pièces est donc diminué.

De plus, l'assemblage de la première pièce de carrosserie et du presseur à l'aide d'un ensemble selon l'invention est très simple puisqu'il suffit d'introduire la saillie de la première pièce de carrosserie dans la gorge. Les coûts de montage sont donc diminués.

En outre, comme le presseur ne comprend pas de languettes ponctuelles devant être placées précisément sur le véhicule de façon à coopérer avec des orifices de la première pièce de carrosserie, il peut être sensiblement invariant selon sa dimension longitudinale. Il est donc facile de fabriquer un presseur standard, apte à effectuer l'accostage sur deux pièces de carrosserie distinctes ayant sensiblement la même courbure. On peut en effet fabriquer le presseur par extrusion et il suffit ensuite de couper le presseur standard à la bonne longueur en fonction du modèle du véhicule automobile concerné.

Grâce à l'ensemble selon l'invention, la fabrication de la première pièce de carrosserie est également simplifiée puisqu'il n'est pas nécessaire que celle-ci soit munie d'orifices tels que ceux nécessaires dans l'état de la technique pour l'encliquetage avec le presseur. Le moule pour former la première pièce de carrosserie est alors simplifié car on peut diminuer le nombre de blocs mobiles, permettant de former ces trous, présents dans le moule. Du fait de la simplification de l'outillage, on diminue également les coûts de fabrication.

L'invention peut également comprendre l'une ou plusieurs des caractéristiques de la liste ci-dessous :
- la paroi associée à la deuxième pièce de carrosserie est une paroi de la deuxième pièce de carrosserie ou une paroi du presseur apte à longer la deuxième pièce de carrosserie lorsque le presseur est positionné sur la deuxième pièce de carrosserie. Dans le premier cas, cela permet à l'extrémité de la première pièce de carrosserie d'être au plus proche la deuxième pièce de carrosserie de façon à optimiser encore les jeux entre les deux pièces de carrosserie. Dans le deuxième cas, la paroi longeant la deuxième pièce de carrosserie appartient au presseur, celui-ci formant à lui seul la gorge. Il est alors plus facile de gérer l'espacement entre les deux parois et de prévoir l'élasticité optimale de la languette. La deuxième pièce de carrosserie est par exemple une aile,
- la première pièce de carrosserie et le presseur comprennent des moyens complémentaires de verrouillage de la saillie dans la gorge. Cela permet de mieux assurer la tenue des jeux et affleurements lorsque le véhicule est en fonctionnement. La première pièce de carrosserie est par exemple une peau de pare-chocs,
- de façon optionnelle, les moyens de verrouillage comprennent au moins une surface de butée ménagée sur le presseur, notamment la languette et/ou sur la paroi associée à la deuxième pièce de carrosserie, cette surface coopérant avec une surface de butée complémentaire de la saillie,
- les moyens de verrouillage peuvent comprendre une dépression ou un bourrelet ménagé sur le presseur, un bourrelet ou une dépression complémentaire étant alors ménagé sur la première pièce de carrosserie. Les surfaces du bourrelet et de la dépression constituent alors des surfaces de butée complémentaires.
- lorsque la paroi associée à la deuxième pièce de carrosserie est une paroi apte à longer la deuxième pièce de carrosserie lorsque le presseur est positionné sur la deuxième pièce de carrosserie, les moyens de verrouillage, notamment la surface de butée, de préférence la dépression, sont ménagés sur ladite paroi. Dans ce cas, l'élément de verrouillage complémentaire de la première pièce de carrosserie, notamment la surface de butée complémentaire, de préférence le bourrelet, est ménagée sur la saillie de la première pièce de carrosserie pour être située au niveau de l'ouverture du moule et cette surface de butée complémentaire n'est pas en contre-dépouille, ce qui permet de simplifier le moule permettant de fabriquer la première pièce de carrosserie ,
- lorsque la paroi associée à la deuxième pièce de carrosserie est la paroi apte à longer la deuxième pièce de carrosserie, ladite paroi est reliée à la languette par une zone de pliage, constituée de préférence par une zone de moindre épaisseur, notamment un film-charnière. Cela permet de fabriquer le presseur à l'aide d'un moule de conception plus simple, l'étape de pliage étant également facile à mettre en oeuvre et peu coûteuse. On peut alors économiser des coûts de fabrication de la pièce. Ce mode de réalisation est particulièrement avantageux lorsque les moyens de verrouillage sont placés sur la paroi du presseur longeant la deuxième pièce de carrosserie, du fait de la forme complexe qu'est susceptible dans ce cas de prendre la paroi, et donc le moule,
- le presseur comprend au moins une zone de faiblesse agencée perpendiculairement à la direction longitudinale du presseur. Cela permet d'adapter le presseur à la courbure de l'aile, en pliant celui-ci au niveau des zones de faiblesse pour qu'il suive la courbure de l'aile. Ainsi, un même presseur peut être utilisé pour effectuer l'accostage sur deux pièces de carrosserie ayant des courbures différentes. De telles zones de faiblesse peuvent être présentes régulièrement sur le presseur, par exemple tous les 2 à 4 centimètres. Elles sont par exemple constitués par des évidements ménagés dans le presseur.
- le presseur comprend au moins un élément de fixation à la deuxième pièce de carrosserie, apte à coopérer avec un orifice complémentaire agencé sur la deuxième pièce de carrosserie. Plus particulièrement, le presseur comprend au moins un élément en forme de T, destiné à coopérer avec un orifice de forme complexe, par exemple en forme de clé ou de serrure, placé sur la deuxième pièce de carrosserie. Ainsi, la solidarisation du presseur et de la deuxième pièce de carrosserie est plus simple puisqu'elle est effectuée sans l'intervention d'éléments extérieurs tels que des vis. Le presseur étant fixé à la deuxième pièce de carrosserie directement et sans élément intermédiaire, la première pièce de carrosserie est au plus proche de la deuxième pièce de carrosserie, ce qui permet d'améliorer encore les jeux et affleurements entre ces deux pièces ;
- au moins une extrémité de la languette selon la direction longitudinale du presseur présente une dénivellation agencée pour que l'extrémité de la languette soit plus éloignée de la paroi associée à la deuxième pièce de carrosserie que le centre de la languette, lorsque le presseur est positionné sur la deuxième pièce de carrosserie. Ainsi, la gorge est plus ouverte à son extrémité, ce qui permet de faciliter le montage de la saillie dans le presseur, ce dernier étant relativement rigide,
- le presseur comprend un orifice de fixation agencé pour coopérer avec un élément de fixation apte à solidariser la première et la deuxième pièce de carrosserie. L'élément de fixation permet de maintenir ensemble les éléments de l'arche de roue. Lorsque la paroi associée à la deuxième pièce de carrosserie ne fait pas partie du presseur, il permet également de maintenir les positions relatives des deux parois de la gorge lorsque le véhicule est en fonctionnement, ce qui permet de sécuriser l'assemblage de la saillie et du presseur,
- la languette est fusible pour une sollicitation supérieure à une valeur prédéterminée. Cela évite d'endommager l'aile en cas de choc frontal, car la gorge est apte à s'ouvrir au-delà d'une sollicitation prédéterminée et ne maintient plus la saillie. Ainsi, les première et deuxième pièces de carrosserie n'étant plus solidaires, la contrainte appliquée sur la première pièce de carrosserie lors d'un choc frontal n'est pas susceptible d'être transmise à la deuxième pièce de carrosserie et d'endommager celle-ci. Dans le cas où le presseur comprend en outre un orifice accueillant un élément de fixation apte à solidariser la première et la deuxième pièce de carrosserie, l'élément de fixation est également fusible,
- le presseur est venu de moulage avec la deuxième pièce de carrosserie. Ainsi, cela diminue le nombre de pièces à assembler et cela assure un meilleur positionnement de la première pièce de carrosserie sur la deuxième pièce de carrosserie car l'espacement entre la languette et la paroi associée à la deuxième pièce de carrosserie ne dépend pas de la fixation du presseur sur la deuxième pièce de carrosserie et ne varie donc pas ou très peu. En outre, aucune étape n'est nécessaire pour monter le presseur sur l'aile,
- ie presseur est réalisé en matière plastique, notamment en polypropylène (PP), de préférence chargé de fibres. Comme le presseur est réalisé en matière plastique, il présente une certaine flexibilité selon sa direction longitudinale et peut s'adapter à des petites variations de la courbure de l'aile, même lorsqu'il ne présente pas de zones de faiblesse. Ainsi, un presseur simple, sans zones de faiblesse, peut également être utilisé pour plusieurs véhicules ou plusieurs versions d'un même véhicule présentant de légères différences au niveau de la courbure de l'aile,
- la première pièce de carrosserie forme une peau de pare-chocs. Une telle peau de pare-chocs présente généralement une crosse. On rappelle que la crosse de la peau de pare-chocs est la partie de celle-ci agencée sur une face latérale du véhicule lorsque la peau est montée sur le véhicule. La crosse présente généralement un retour de crosse formant un rebord dans le plan horizontal qui permet la fixation de la peau à l'aile. L'ensemble selon l'invention permet alors de diminuer la profondeur, selon la direction transversale du véhicule, du retour de crosse . Dans l'état de la technique, le pare-chocs est en effet muni de trous au niveau du retour de crosse et il est donc plus fragile dans cette zone. Une plus grande profondeur de retour de crosse est donc nécessaire pour assurer la bonne tenue de la peau lors du montage et démontage par encliquetage de celle-ci dans le presseur. En revanche, selon l'invention, le retour de crosse n'étant pas muni de trous, on peut diminuer sa profondeur. De nombreux avantages en découlent. En effet, cela entraîne un gain de poids de la peau de pare-chocs et en outre, du fait de sa profondeur diminuée, la zone de retour de crosse est plus souple et donc plus facile à amener en position, en limitant les contraintes d'assemblage. Ainsi, lors de sa mise en place sur le véhicule automobile, la peau de pare-chocs peut épouser la forme de l'aile en étant soumis, une fois monté, à moins de contraintes résiduelles.

L'invention a également pour objet un presseur appartenant à un ensemble selon l'invention.

Il a également pour objet une pièce de carrosserie formant une première pièce de carrosserie d'un ensemble selon l'invention.

Un autre objet de l'invention est une combinaison d'un ensemble selon l'invention et d'une deuxième pièce de carrosserie, formant de préférence une aile de véhicule automobile.

Un autre objet de l'invention est un ensemble d'une pièce de carrosserie, formant de préférence une aile de véhicule automobile, et d'un presseur apte à mettre en référence la pièce de carrosserie et une autre pièce de carrosserie, dans lequel :
- le presseur comprend une languette s'étendant dans la direction longitudinale du presseur essentiellement sur toute la longueur de celui-ci, la languette du presseur et une paroi de la pièce de carrosserie étant aptes à former une gorge lorsque le presseur est positionné sur la pièce de carrosserie,
- la languette est déformable élastiquement selon une direction perpendiculaire à la direction longitudinale du presseur, de façon à s'éloigner de la paroi avec laquelle elle forme une gorge.

L'invention a également pour objet un procédé de mise en référence d'une première pièce de carrosserie appartenant à l'ensemble selon l'invention avec une deuxième pièce de carrosserie, le procédé comprenant les étapes suivantes :
- on positionne le presseur sur la deuxième pièce de carrosserie de sorte que la languette du presseur et une paroi associée à la deuxième pièce de carrosserie forment une gorge,
- on introduit dans la gorge la saillie de la première pièce de carrosserie.

L'invention sera mieux comprise à la lecture de la description qui va suivre, donnée uniquement à titre d'exemple et faite en se référant aux dessins dans lesquels :
- la figure 1 une vue en perspective d'une combinaison d'une première pièce de carrosserie, d'une deuxième pièce de carrosserie et d'un presseur selon un premier mode de réalisation de l'invention,
- la figure 2 est une vue en perspective de la combinaison de la figure 1 lorsque la première pièce de carrosserie est mise en place dans le presseur,
- la figure 3 est une vue en perspective d'une combinaison selon un deuxième mode de réalisation de l'invention,
- la figure 4 est une vue en coupe du presseur de la figure 3,
- la figure 5A est une vue en perspective d'un presseur selon un troisième mode de réalisation de l'invention,
- la figure 5B est une vue en perspective et en détail d'une extrémité du presseur de la figure 5A, selon sa direction longitudinale,
- les figures 6A et 6B sont des vues de dessus du presseur de la figure 5A lorsque celui-ci monté respectivement sur une aile droite ou une aile courbée,
- la figure 7 est une vue en perspective d'un presseur selon un quatrième mode de réalisation de l'invention,
- La figure 8 est une vue en perspective d'un presseur selon un cinquième mode de réalisation de l'invention.

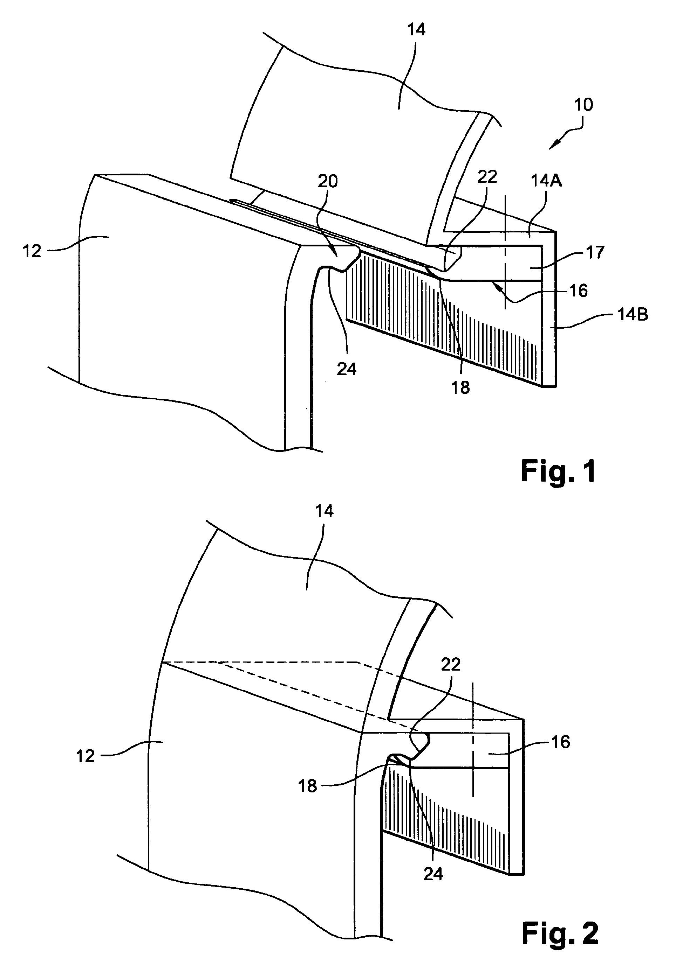

On a représenté sur la figure 1 une combinaison 10 d'une première pièce de carrosserie 12, constituée par une peau de pare-chocs de véhicule automobile, d'une deuxième pièce de carrosserie 14, constituée par une aile de véhicule automobile, et d'un presseur 16 destiné à mettre en référence la peau 12 et l'aile 14.

Comme on le voit sur la figure 1, l'aile 14 forme une paroi unique comprenant, lorsque l'aile est montée sur le véhicule automobile, une partie horizontale 14A et une partie verticale 14B, ces parties 14A, 14B formant entre elles un angle droit. Le presseur 16 comprend une partie arrière 17 constituée par une paroi pleine apte à être fixée à l'aile 14 de façon à longer les parties horizontale 14A et verticale 14B de la paroi de l'aile, au niveau de l'angle droit formé par ces deux parois. La fixation du presseur sur l'aile est effectuée selon un axe Z, représenté en traits mixtes sur la figure 1, à l'aide d'éléments externes non représentés, tels que des vis.

L'aile et la peau sont réalisés en matière plastique, de même que le presseur. Ce dernier est plus particulièrement réalisé en polypropylène (PP) renforcé de fibres, en polyamide (PA) renforcé, ou en polyoxyméthylène (POM) . Il peut également comprendre un insert métallique, notamment lorsqu'il est fabriqué en popypropylène.

Le presseur 16 comporte en partie avant une languette 18 continue s'étendant essentiellement selon la direction longitudinale du presseur 16 sur toute la longueur de celui-ci. La languette comprend une extrémité liée à la paroi 17 et une extrémité libre. Lorsque le presseur est positionné sur l'aile 14, la languette 18 est distante de la partie horizontale 14A de la paroi de l'aile et essentiellement parallèle à cette partie 14A. La languette 18 forme en outre une gorge avec la partie horizontale 14A de la paroi de l'aile 14.

La languette 18 est déformable élastiquement selon une direction perpendiculaire à la direction longitudinale du presseur de manière à pouvoir s'écarter de la paroi 14A.

La peau 12 comprend à son extrémité une saillie 20 essentiellement complémentaire de la gorge. La saillie 20 est dimensionnée pour être légèrement plus haute que la gorge. Du fait de la déformation de la languette 18, la saillie 20 peut tout de même être introduite dans la gorge formée par la languette 18 et la paroi de l'aile 14. La languette 18 est en effet suffisamment déformable pour permettre à la saillie 20 d'être introduite dans la gorge. La languette est en particulier conformée pour être déformable manuellement par un opérateur mais pas de façon involontaire.

Du fait des dimensions de la saillie 20 et de la gorge, une fois la saillie introduite dans la gorge, la languette est écartée de sa position d'équilibre de sorte que la gorge est plus ouverte que lorsque la languette 18 est au repos. La languette 18 a donc tendance à revenir vers sa position d'équilibre et exerce de ce fait une force sur la saillie 20 et presse cette dernière contre la partie 14A de la paroi de l'aile 14.

Comme on le voit sur la figure 2, la languette est légèrement recourbée à son extrémité libre et comprend à cette extrémité une surface de butée 22 apte à coopérer avec une surface complémentaire 24 de la saillie 20 de la peau 12. Ces surfaces de butées complémentaires 22, 24 forment des moyens de verrouillage permettant de maintenir la saillie dans la gorge.

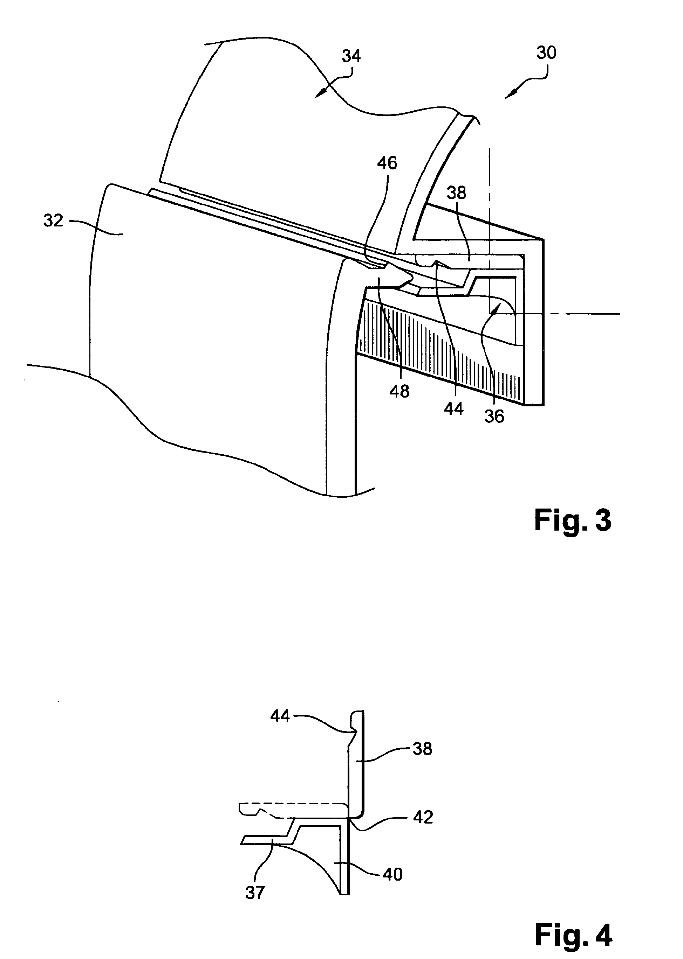

On va maintenant commenter les figures 3 et 4 représentant une combinaison selon un deuxième mode de réalisation de l'invention.

La combinaison 30 représentée sur ces figures comprend une peau de pare-chocs 32, une aile 34 et un presseur 36. L'aile 34 est sensiblement identique à l'aile 14 de la figure 1 et 2.

Le presseur 36 comprend, comme on le voit notamment à la figure 4, une première paroi 37 formant languette déformable et une deuxième paroi 38, destinée à longer la paroi de l'aile 34 lorsque le presseur est positionné sur l'aile 34. Il comprend également en partie arrière des nervures de rigidification 40, permettant d'améliorer la tenue du presseur 36.

La première et la deuxième parois 37, 38 sont reliées par l'intermédiaire d'une zone de moindre épaisseur constituant un film charnière 42. Cela permet de mouler d'un seul tenant les parois 37 et 38 dans la position représentée en traits pleins sur la figure 4 et de les plier ensuite pour que le presseur soit monté sur l'aile 34 dans la position représentée en traits pointillés à la figure 4. La présence du film charnière 42 permet de faciliter le moulage du presseur.

La paroi 38 du presseur est munie d'une dépression 44 formant un cran et s'étendant sur la dimension longitudinale de la gorge. Cette dépression 44 est destinée à coopérer avec un relief 46 complémentaire d'une saillie 48 située à l'extrémité de la peau 32. La dépression 44 et le relief 46 comprennent des surfaces de butée complémentaires formant moyens de verrouillage de la saillie dans la gorge formée par les parois 37 et 38.

Contrairement au mode de réalisation représenté aux figures 1 et 2, le relief 46 de la saillie est dirigé vers le haut et situé au niveau de l'ouverture du moule, ce qui permet d'éviter une conception complexe du moule dû à la présence d'une contre-dépouille sur la peau de pare-chocs 32.

Dans ce mode de réalisation comme dans le premier mode de réalisation, la languette 37 et la saillie 48 sont continues et la saillie est dimensionnée pour être introduite dans la gorge formée par les première et deuxième parois 37, 38 du presseur de sorte que la languette 37 soit légèrement contrainte et presse la saillie contre la deuxième paroi 38.

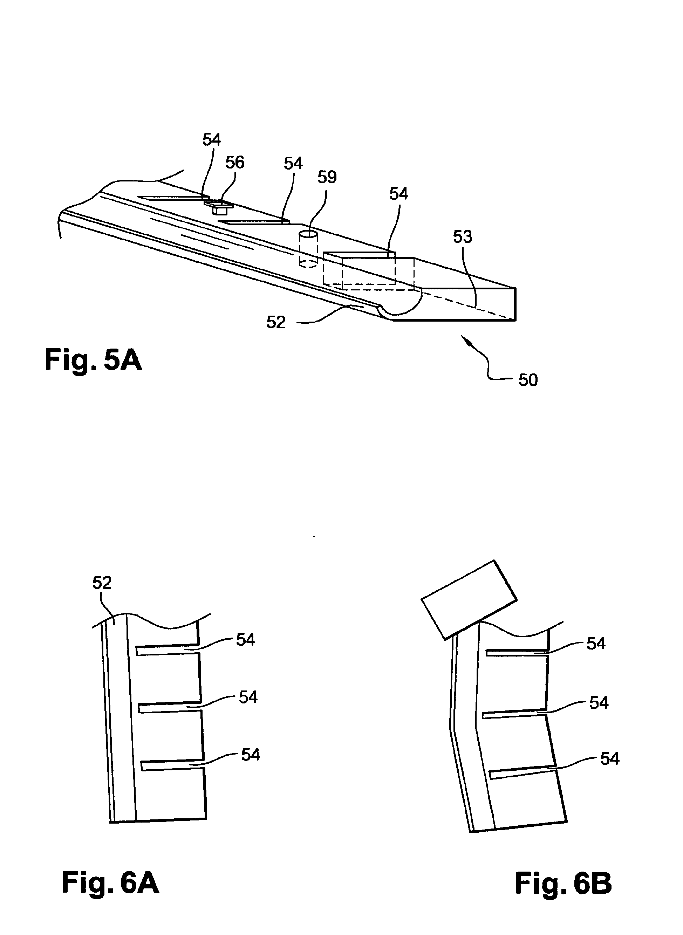

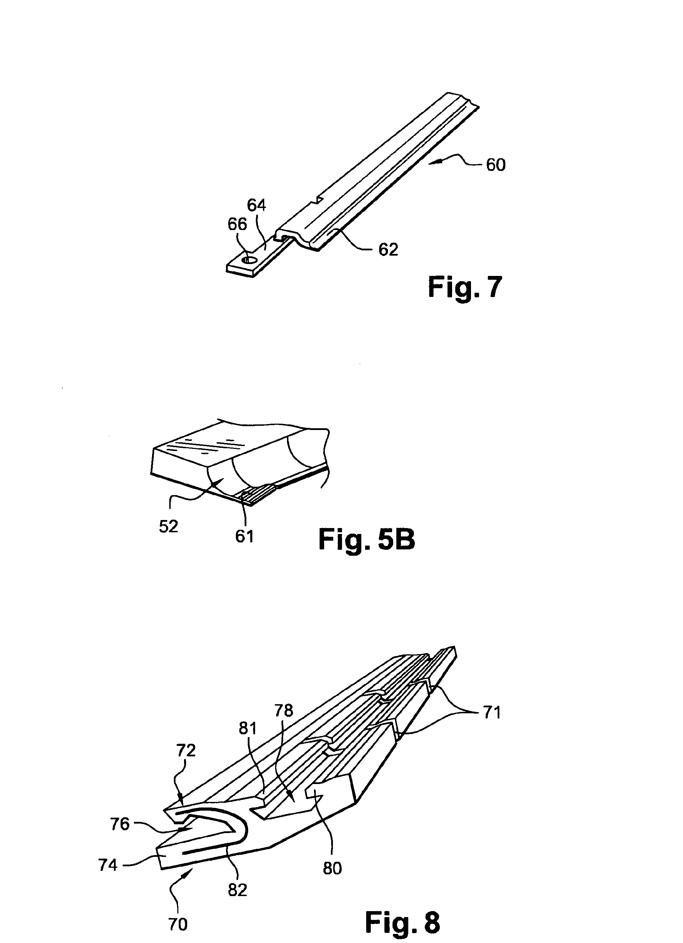

On va maintenant décrire la figure 5 représentant un presseur selon un troisième mode de réalisation de l'invention.

Le presseur 50 est de forme générale semblable à celui de la figure 1. Ce presseur 50 comprend en partie avant une languette 52, destinée à accueillir une saillie d'une peau de pare-chocs conformément à ce qui a été décrit à la figure 1. Ce presseur 50 comprend en partie arrière une paroi 53 destinée à longer l'aile du véhicule automobile, sans nécessairement être en contact avec la paroi. Des zones de faiblesses 54 formées par des évidements ménagés sur toute la hauteur du presseur 50 sont ménagés dans la paroi 53, comme on le voit à la figure 6A.

Comme on le voit sur la figure 6B, ces évidements 54 permettent de plier légèrement le presseur de sorte que celui-ci puisse suivre la courbure de l'aile, même si celle-ci n'est pas conforme à la courbure originale du presseur. Ainsi, un presseur standard peut être mis en place sur toute aile, quelle que soit sa courbure, pour régler au mieux les jeux et affleurements de l'aile et de la peau.

En outre, le presseur 50 comporte un élément en T 56, et un orifice de fixation 59, par exemple apte à recevoir une vis.

L'élément en T 56 coopère avec un orifice de forme complexe ménagé dans l'aile pour effectuer la fixation du presseur selon la direction verticale lorsque le presseur est monté sur le véhicule automobile. La fixation de l'aile au presseur est donc effectuée par engagement dans l'orifice prévu dans la deuxième pièce de carrosserie et glissement selon la direction longitudinale du véhicule.

Comme on le voit sur la figure 5B représentant en détail l'extrémité de la languette 52 de la figure 5A selon la direction longitudinale du presseur, la languette 52 présente à son extrémité selon la direction longitudinale du presseur une dénivellation 61 ménagée dans la languette de sorte qu'elle s'éloigne de la partie horizontale de la paroi de l'aile, lorsque le presseur est positionné sur l'aile. La gorge est ainsi légèrement plus large à l'extrémité de celle-ci qu'en son centre. Cela permet un montage et un démontage plus facile de la saillie de la peau dans la gorge.

La figure 7 représente un autre mode de réalisation d'un presseur selon l'invention. Ce presseur 60 est essentiellement conforme à celui de la figure 1. Il comprend une languette 62 permettant d'accueillir une saillie d'une peau de pare-chocs comme cela a été décrit à la figure 1. Comme on le remarque sur la figure 7, le presseur comprend à son extrémité selon sa direction longitudinale un prolongement 64 muni d'un orifice 66, destiné à accueillir un élément de fixation permettant de solidariser l'aile et la peau de pare-chocs. Cet élément de fixation généralement utilisé pour fixer le pare-boue est ici intégré au presseur. Il empêche en outre la gorge de s'ouvrir de façon inopinée, par exemple à la suite d'un choc se produisant à l'avant du véhicule automobile, et assure le maintien de la saillie dans la gorge.

La figure 8 représente un presseur selon un autre mode de réalisation de l'invention. Comme on le voit sur la figure, le presseur 70 est de section transversale constante. Il peut donc être fabriqué de façon standard, par extrusion, puis coupé à la bonne longueur en fonction du modèle sur lequel il doit être adapté. Le presseur 70 comprend des échancrures 71 qui sont formées en reprise dans celui-ci, suite à l'extrusion.

Le presseur 70 comprend à une extrémité selon une direction transversale du presseur, une languette 72 et une paroi 74 délimitant une gorge 76. Il comprend également au voisinage de son extrémité opposée une deuxième gorge 78 délimitée à l'aide de deux languettes déformables élastiques 80 et 81 en vis-à-vis.

La deuxième gorge 78 permet d'accueillir des éléments de fixation du presseur 70 et d'une aile du véhicule, ces éléments étant introduits dans la deuxième gorge 78 en déformant les languettes 80 et 81 et étant maintenus dans la deuxième gorge par les surfaces de butées se trouvant sous les languettes 80 et 81.

Le presseur comprend également un insert métallique 82 formant un profilé en C et agencé autour de la gorge 76 pour former en partie la languette 72 et la paroi 74. Cet insert permet d'améliorer le retour élastique de la languette 72 et également de rendre le presseur plus robuste, quelles que soient les conditions climatiques, lorsque celui-ci est placé sur le véhicule en fonctionnement.

L'ensemble selon l'invention présente de nombreux avantages. Il permet en effet une fixation simple de l'aile et de la peau, assurant des jeux et affleurements satisfaisants entre l'aile et la peau de pare-chocs.

L'invention n'est pas limitée aux modes de réalisation tels que décrit ci-dessus.

En effet, la languette permettant de maintenir la saillie de la première pièce de carrosserie dans la gorge peut par exemple être fusible pour une sollicitation supérieure à une valeur prédéterminée de sorte qu'un choc frontal n'endommage pas l'aile du véhicule automobile.

En outre, le presseur peut être venu de moulage avec l'aile si celle-ci est en matière plastique.

Les moyens de verrouillage de la saillie et de la gorge ne sont pas forcément ceux décrits dans les modes de réalisation présentés, de même que les moyens de fixation à l'aile. Les zones de faiblesse du presseur peuvent également être constituées par d'autres éléments que des évidements, par exemple des zones d'épaisseur moindre.

Il est également à noter qu'un presseur peut comprendre les fonctionnalités décrites aux figures 5 et 7 en combinaison. Un presseur, même de forme décrite à la figure 2 ou de toute forme, peut par exemple comprendre des pions de centrage et/ou des moyens de fixation à l'aile tels que 56 ou 59, et/ou des évidements tels que 54 et/ou un prolongement tel que 64. La languette 37 d'un tel presseur peut également comprendre à son extrémité une dénivellation telle que 62.

Le presseur peut également comprendre pour sa fixation et notamment son positionnement relativement à l'aile, des pions de centrage coopérant avec des trous ménagés dans l'aile.

Les moyens de fixation formés par les éléments en T et les orifices 59 ne sont pas forcément agencés en combinaison sur une pièce. Un presseur peut comprendre un élément 56 sans orifice 59 ou un orifice 59 sans élément 56 permettant d'assurer seul la fixation à l'aile.

Les presseurs, ailes et peaux de pare-chocs décrits ne sont pas non plus limités aux formes et aux matériaux décrits. Par exemple, le presseur de la figure 8, extrudé, peut ne pas comprendre d'insert métallique. Un insert peut aussi être inclus dans tout autre presseur selon l'invention, quels que soient sa forme et son mode de fabrication (par injection, par extrusion, etc).

La combinaison selon l'invention peut également comprendre à d'autres pièces de carrosseries qu'une aile et une peau, par exemple entre une peau de pare-chocs et un bloc optique.

## Revendications

1. Ensemble d'une première pièce de carrosserie (12 ; 32) et d'un presseur (16 ; 36 ; 50 ; 60) apte à mettre en référence, la première pièce de carrosserie et une deuxième pièce de carrosserie (14 ; 34), dans lequel :
- le presseur (16 ; 36 ; 60) comprend une languette (18 ; 37 ; 52 ; 62) s'étendant dans une direction longitudinale du presseur essentiellement sur toute la longueur de celui-ci, apte à former une gorge avec une paroi (14A ; 38) longeant la deuxième pièce de carrosserie lorsque le presseur est positionné sur la deuxième pièce de carrosserie,
- la languette (18 ; 37 ; 52 ; 62) est déformable élastiquement selon une direction perpendiculaire à la direction longitudinale du presseur, de manière à s'éloigner de la paroi avec laquelle elle forme une gorge,
- la première pièce de carrosserie (12 ; 32) comprend, à une extrémité, une saillie (20 ; 48) dimensionnée pour s'engager dans la gorge essentiellement sur toute la longueur de celle-ci,
- la languette (18 ; 37 ; 52 ; 62) et la saillie (20 ; 48) sont conformées de sorte que, lorsque la saillie est engagée dans la gorge, la languette est apte à presser la saillie contre la paroi (14A ; 38) avec laquelle elle forme une gorge,
**caractérisé en ce que**: la première pièce de carrosserie (12 ; 32) et le presseur (16 ; 36) comprennent des moyens complémentaires de verrouillage (22, 24 ; 44, 46) de la saillie (20 ; 48) dans la gorge, les moyens de verrouillage comprenant au moins une surface de butée (22 ; 44) ménagée sur la paroi du presseur longeant la deuxième pièce de carrosserie et coopérant avec une surface de butée complémentaire (24 ; 46) de la saillie (20 ; 48).

2. Ensemble selon la revendication précédente, dans lequel, la paroi longeant la deuxième pièce de carrosserie est reliée à la languette (37) par une zone de pliage, constituée de préférence par une zone de moindre épaisseur, notamment un film-charnière (42).

3. Ensemble selon l'une quelconque des revendications précédentes, dans lequel le presseur (50) comprend au moins une zone de faiblesse (54) agencée perpendiculairement à la direction longitudinale du presseur.

4. Ensemble selon l'une quelconque des revendications précédentes, dans lequel au moins une extrémité de la languette (52) selon la direction longitudinale du presseur (50) présente une dénivellation (61) agencée pour que l'extrémité de la languette soit plus éloignée de la paroi apte à longer la deuxième pièce de carrosserie que le centre de la languette, lorsque le presseur est positionné sur la deuxième pièce de carrosserie.

5. Ensemble selon l'une quelconque des revendications précédentes, dans lequel la languette est fusible pour une sollicitation supérieure à une valeur prédéterminée.

6. Ensemble selon l'une quelconque des revendications précédentes, dans lequel le presseur est venu de moulage avec la deuxième pièce de carrosserie.

7. Ensemble selon l'une quelconque des revendications précédentes, dans lequel le presseur est réalisé en matière plastique, éventuellement chargée de fibres,, notamment en polypropylène (PP), en polyamide (PA) ou en polyoxyméthylène (POM).

8. Presseur (16 ; 36 ; 50 ; 60) appartenant à un ensemble selon l'une quelconque des revendications 1 à 7.

9. Pièce de carrosserie (12 ; 32) formant une première pièce de carrosserie d'un ensemble selon l'une quelconque des revendications 1 à 7.

10. Combinaison d'un ensemble selon l'une quelconque des revendications 1 à 7 et d'une deuxième pièce de carrosserie (14 ; 34), formant de préférence une aile de véhicule automobile.

11. Procédé de mise en référence d'une première pièce de carrosserie (12 ; 32) de l'ensemble selon l'une des revendications 1 à 7 avec une deuxième pièce de carrosserie (14 ; 34), **caractérisé en ce que** :
- on positionne un presseur (16 ; 36 ; 50 ; 60) appartenant à l'ensemble selon l'une quelconque des revendications 1 à 7 sur la deuxième pièce de carrosserie (14 ; 34), de sorte que la languette (18 ; 37 ; 52 ; 62) du presseur et la paroi (14A, 38) longeant la deuxième pièce de carrosserie forment une gorge,
- on introduit dans la gorge la saillie (20 ; 48) de la première pièce de carrosserie (12 ; 32).

## Claims

1. An assembly comprising a first bodywork piece (12; 32) and a presser (16; 36; 50; 60) suitable for putting the first bodywork piece into a reference position relative to a second bodywork piece (14; 34), wherein:
• the presser (16; 36; 50; 60) comprises a tongue (18; 37; 52; 62) extending in a longitudinal direction of the presser essentially over the entire length thereof, suitable for co-operating with a wall (14A; 38) to form a groove running along the second bodywork piece when the presser is positioned on the second bodywork piece;
• the tongue (18; 37; 52; 62) is elastically deformable in a direction perpendicular to the longitudinal direction of the presser, in such a manner as to move away from the wall with which it forms a groove;
• the first bodywork piece (12; 32) includes, at one end, a projection (20; 48) dimensioned to engage in the groove essentially over the entire length thereof; and
• the tongue (18; 37; 52; 62) and the projection (20; 48) are shaped in such a manner that when the projection is engaged on the groove, the tongue is suitable for pressing the projection against the wall (14A; 38) with which it forms a groove;
the assembly being **characterized in that** the first bodywork piece (12; 32) and the presser (16; 36) include complementary locking means (22, 24; 44, 46) for locking the projection (20; 48) in the groove, the locking means comprising at least one abutment surface (22; 44) formed on the wall of the presser running along the second bodywork piece and co-operating with a complementary abutment surface (24; 46) of the projection (20; 48).

2. An assembly according to the preceding claim, wherein the wall running along the second bodywork piece is connected to the tongue (37) by a fold zone that is preferably constituted by a zone of reduced thickness, in particular a film hinge (42).

3. An assembly according to either preceding claim, wherein the presser (50) includes at least one zone of weakness (54) arranged perpendicularly to the longitudinal direction of the presser.

4. An assembly according to any preceding claim, wherein at least one end of the tongue (52) in the longitudinal direction of the presser (50) presents an offset (61) arranged so that, when the presser is positioned on the second bodywork piece, the end of the tongue is further away from the wall suitable for running along the second bodywork piece than is the center of the tongue.

5. An assembly according to any preceding claim, wherein the tongue acts as a fuse for stress greater than a predetermined value.

6. An assembly according to any preceding claim, wherein the presser is molded integrally with the second bodywork piece.

7. An assembly according to any preceding claim, wherein the presser is made of plastics material, possibly filled with fibers, in particular of polypropylene (PP), of polyamide (PA), or of polyoxymethylene (POM).

8. A presser (16; 36; 50; 60) forming part of an assembly according to any one of claims 1 to 7.

9. A bodywork piece (12; 32) forming a first bodywork piece of an assembly according to any one of claims 1 to 7.

10. The combination of an assembly according to any one of claims 1 to 7 together with a second bodywork piece (14; 34), preferably forming a motor vehicle fender.

11. A method of putting a first bodywork piece (12; 32) of the assembly according to any one of claims 1 to 7 into a reference position relative to a second bodywork piece (14; 34), the method being **characterized by**:
• positioning a presser (16; 36; 50; 60) forming part of the assembly according to any one of claims 1 to 7 on the second bodywork piece (14; 34) in such a manner that the tongue (18; 37; 52; 62) of the presser and the wall (14A; 38) running along the second bodywork piece form a groove; and
• inserting the projection (20; 48) of the first bodywork piece (12; 32) into the groove.

## Patentansprüche

1. Baugruppe mit einem ersten Karosserieteil (12; 32) und einer Presseinrichtung(16; 36; 50; 60), die das erste Karosserieteil und ein zweites Karosserieteil (14; 34) zueinander positionieren kann, wobei:
- die Presseinrichtung (16; 36; 50; 60) eine Lasche (18; 37; 52; 62) aufweist, die sich in einer Längsrichtung der Presseinrichtung im Wesentlichen auf deren ganzer Länge erstreckt, die eine Hohlkehle mit einer Wand (14A; 38) entlang des zweiten Karosserieteils bilden kann, wenn die Presseinrichtung auf dem zweiten Karosserieteil positioniert ist,
- die Lasche (18; 37; 52; 62) elastisch entlang einer Richtung senkrecht zu der Längsrichtung der Presseinrichtung derart verformbar ist, dass sie sich von der Wand, mit der sie eine Hohlkehle bildet, entfernt,
- das erste Karosserieteil (12; 32) an einem Ende einen Vorsprung (20; 48) aufweist, der bemessen ist, um sich in die Hohlkehle im Wesentlichen auf deren ganzer Länge einzufügen,
- die Lasche (18; 37; 52; 62) und der Vorsprung (20; 48) derart ausgebildet sind, dass, wenn der Vorsprung in die Hohlkehle eingefügt ist, die Lasche den Vorsprung gegen die Wand (14A; 38), mit der sie eine Hohlkehle bildet, andrücken kann,
**dadurch gekennzeichnet, dass** das erste Karosserieteil (12; 32) und die Presseinrichtung (16; 36) komplementäre Verriegelungsmittel (22, 24; 44, 46) des Vorsprungs (20; 48) in der Hohlkehle aufweisen, wobei die Verriegelungsmittel mindestens eine Anschlagfläche (22; 44) aufweisen, die auf der Wand der Presseinrichtung, die sich entlang des zweiten Karosserieteils erstreckt und mit einer komplementären Anschlagfläche (24; 46) des Vorsprungs (20; 48) zusammenwirkt, eingerichtet ist.

2. Baugruppe nach dem vorhergehenden Anspruch, bei der die Wand, die sich entlang des zweiten Karosserieteils erstreckt, mit der Lasche (37) durch eine Faltzone verbunden ist, die vorzugsweise aus einer Zone mit geringerer Dicke, insbesondere aus einer Scharnierfolie (42), besteht.

3. Baugruppe nach einem der vorhergehenden Ansprüche, bei der die Presseinrichtung (50) mindestens einen Schwächebereich (54) aufweist, der senkrecht zu der Längsrichtung der Presseinrichtung eingerichtet ist.

4. Baugruppe nach einem der vorhergehenden Ansprüche, bei der mindestens ein Ende der Lasche (52) entlang der Längsrichtung der Presseinrichtung (50) ein Gefälle (61) aufweist, das eingerichtet ist, damit das Ende der Lasche von der Wand, die entlang des zweiten Karosserieteils verlaufen kann, weiter entfernt ist als die Mitte der Lasche, wenn die Presseinrichtung auf dem zweiten Karosserieteil positioniert ist.

5. Baugruppe nach einem der vorhergehenden Ansprüche, bei der die Lasche bei einer Beanspruchung, die größer ist als ein vorbestimmter Wert, schmelzbar ist.

6. Baugruppe nach einem der vorhergehenden Ansprüche, bei der die Presseinrichtung aus einem Stück mit dem zweiten Karosserieteil geformt wird.

7. Baugruppe nach einem der vorhergehenden Ansprüche, bei der die Presseinrichtung aus Plastik hergestellt ist, das eventuell mit Fasern verstärkt ist, insbesondere aus Polypropylen (PP), aus Polyamid (PA) oder aus Polyoxymethylen (POM).

8. Presseinrichtung (16; 36; 50; 60), die zu einer Baugruppe nach einem der Ansprüche 1 bis 7 gehört.

9. Karosserieteil (12; 32), der ein erstes Karosserieteil einer Baugruppe nach einem der Ansprüche 1 bis 7 bildet.

10. Kombination aus einer Baugruppe nach einem der Ansprüche 1 bis 7 und einem zweiten Karosserieteil (14; 34), das vorzugsweise einen Kraftfahrzeugflügel bildet.

11. Verfahren zum Positionieren zueinander eines ersten Karosserieteils (12; 32) der Baugruppe nach einem der Ansprüche 1 bis 7 mit einem zweiten Karosserieteil (14; 34), **dadurch gekennzeichnet, dass**:
- man eine Presseinrichtung (16; 36; 50; 60), die zu der Baugruppe nach einem der Ansprüche 1 bis 7 gehört, auf dem zweiten Karosserieteil (14; 34) derart positioniert ist, dass die Lasche (18; 37; 52; 62) der Presseinrichtung und die Wand (14A, 38), die sich entlang des zweiten Karosserieteils erstreckt, eine Hohlkehle bilden,
- man in die Hohlkehle den Vorsprung (20; 48) des ersten Karosserieteils (12; 32) einfügt.
